# FASCICULE DE BREVET EUROPEEN

(11) **EP 3 417 947 B1**
(45) Date de publication et mention de la délivrance du brevet: **03.05.2023**
(21) Numéro de dépôt: 18175543.0
(22) Date de dépôt: 01.06.2018
(51) Int. Cl.: B05B 11/00, B65D 47/20, G01F 11/14, G01F 11/08, G01F 11/02, B05B 11/04, B65D 47/00, G01F 11/00, B65D 83/00, G01F 11/28

(54) **DISPOSITIF DE DOSAGE DESTINÉ À ÉQUIPER UN RÉCIPIENT ET RÉCIPIENT COMPRENANT UN TEL DISPOSITIF**
DOSIERVORRICHTUNG ZUR AUSSTATTUNG EINES BEHÄLTERS, UND BEHÄLTER, DER EINE SOLCHE VORRICHTUNG UMFASST
METERING DEVICE FOR EQUIPPING A CONTAINER AND CONTAINER COMPRISING SUCH A DEVICE

(30) Priorité: 22.06.2017 FR 1755730
(43) Date de publication de la demande: 26.12.2018
(73) Titulaire: Albéa Services, 92230 Gennevilliers (FR)
(72) Inventeur: EZZINA, Emir, 78180 Montigny-le-Bretonneux (FR)
(74) Mandataire: Gevers & Orès

(56) Documents cités:
- WO-A1-00/37179
- WO-A1-2011/115484
- WO-A1-2012/171708

## Description

### Domaine de l'invention

L'invention concerne un dispositif de dosage destiné à équiper un récipient comprenant un réservoir déformable contenant un produit à distribuer et un récipient comprenant un réservoir déformable et un tel dispositif de dosage.

Le produit fluide à distribuer est notamment liquide ou pâteux. Il est destiné à être utilisé en cosmétique ou dans l'agro-alimentaire et préférentiellement ne comporte pas d'agent asséchant ou de poudre.

### Etat de la technique

On connait des dispositifs de distribution de produit alimentaire liquide ou pâteux consistant en une valve souple en élastomère en forme de dôme qui est munie d'un orifice en croix constitué de deux fentes étroites se croisant. Sous l'effet d'une pression exercée sur le réservoir et de l'augmentation de pression qui s'ensuit à l'intérieur du réservoir, l'orifice en croix s'ouvre menant à la distribution du produit contenu dans le réservoir.

L'utilisation de telles valves s'est répandue car elles permettent de protéger le produit contenu dans le réservoir de l'environnement extérieur et de possibles contaminations.

Cependant, ce type de valve ne permet pas un dosage répétable lors de la distribution du produit. En effet, la distribution assurée par ce type de valve est très dépendant de la viscosité du liquide à distribuer et de la pression assurée par l'utilisateur.

On pourra citer, par exemple, le changement de viscosité observé lorsqu'un récipient de crème solaire est laissé au soleil. La diminution de la viscosité de la crème solaire, provoquée par échauffement, conduit à une augmentation du volume distribué pour une pression identique exercée sur le réservoir par l'utilisateur, en comparaison du volume distribué en l'absence d'échauffement du produit.

Il est aussi connu un dispositif d'aspiration déformable permettant la distribution de produit en lieu et en remplacement d'un col classique de récipient. Ce dispositif consiste en un organe creux déformable comprenant deux chambres séparées par un cloisonnement circulaire déformable, présentant un trou permettant au produit de se déplacer d'une chambre à l'autre. La pointe de l'organe comprend un orifice comportant une fente ou des trous de petite taille qui permettent d'assurer la distribution du produit vers l'extérieur.

En exerçant une pression sur le dispositif, la communication entre les deux chambres est coupée dû à la fermeture du trou situé au niveau du cloisonnement, et l'air présent dans la chambre en communication avec l'orifice d'ouverture est chassé du dispositif, laissant la chambre sous vide partiel. En relâchant la pression exercée sur le dispositif, le trou situé au niveau du cloisonnement s'ouvre, permettant au produit contenu dans le réservoir d'être aspiré dans les deux chambres sous l'effet du vide partiel créé par la chambre aval. Une pression sur le dispositif est de nouveau nécessaire pour que le produit soit distribué.

Ce dispositif reste cependant complexe d'utilisation.

Le document WO 00/37179 A1 divulgue un récipient comprenant une chambre de stockage déformable pour le liquide à distribuer et une chambre de dosage 3 déformable. Selon un mode de réalisation, la chambre de dosage se déforme par le biais de ressorts et de pistons tandis que selon un deuxième mode de réalisation la chambre se déforme par le biais d'un soufflet.

L'invention vise à perfectionner l'art antérieur en proposant un dispositif de dosage qui permet de délivrer une dose répétable d'un produit contenu dans un réservoir indépendamment de la pression exercée par l'utilisateur sur le réservoir et de la viscosité du produit, ceci à l'aide d'une manipulation simple.

A cet effet, selon un premier aspect, l'invention propose un dispositif de dosage destiné à équiper un récipient comprenant un réservoir déformable contenant un produit, ledit dispositif comprenant un insert, ledit insert comportant une chambre de dosage déformable par pression du produit venant du réservoir, ladite chambre de dosage comprenant :
- un clapet haut d'admission du produit depuis le réservoir ;
- un clapet bas de distribution du produit;
- un corps déformable reliant le clapet haut et le clapet bas ;
la chambre de dosage étant configurée pour que, sous la pression du produit venant du réservoir, le clapet haut se ferme par déformation d'une première partie de la chambre, le clapet bas restant fermé, puis le clapet bas s'ouvre sous l'effet de la déformation du corps, la chambre comportant une deuxième partie qui se déforme avant déformation de la première partie, ladite deuxième partie de la chambre formant un dôme, ledit clapet bas se trouvant au niveau dudit dôme, la déformation de la deuxième partie provoquant l'inversion du dôme, sans ouvrir ledit clapet bas.

L'effet de dosage répétitif désiré est ainsi obtenu, selon l'invention, en utilisant la pression provenant du produit contenu dans le réservoir. Autrement dit, grâce à la configuration de la chambre déformable, en particulier de ses différentes parties et les liens établis dans leur déformation respective, une simple pression de l'utilisateur sur le réservoir suffit et la dose distribuée ne dépend plus ni de la pression exercée ni de la viscosité du produit.

Il est en particulier à noter que le clapet haut peut se refermer avant la déformation du corps mais qu'un tel séquencement n'est pas nécessaire. Ainsi, le corps déformable pourra commencer à se comprimer avant la fermeture complète du clapet haut, à condition que le clapet bas reste fermé tant que le clapet haut est ouvert. Autrement dit, la chambre de dosage est configurée pour que le clapet haut se ferme toujours au même degré de déformation du corps. Encore autrement dit, la chambre de dosage est configurée pour que le clapet bas soit maintenu fermé lorsque le clapet haut est ouvert.

Selon les différentes caractéristiques de l'invention, qui pourront être prises ensemble ou séparément :
- la chambre de dosage est faite d'une seule pièce,
- l'insert est fait d'une seule pièce,
- la chambre est configurée pour que la première partie soit mobile avec le corps lors de la déformation dudit corps,
- la chambre de dosage comporte des lignes de faiblesse, ladite chambre de dosage étant déformable le long desdites lignes de faiblesse pour former la première partie de la chambre,
- les lignes de faiblesse sont diamétralement opposées,
- les lignes de faiblesses sont au nombre de deux,
- ladite première partie comprend des volets rabattables l'un vers l'autre, délimités par les lignes de faiblesses,
- les lignes de faiblesse sont situées dans un plan incliné par rapport à un axe longitudinal de l'insert,
- les volets sont, au repos, autour d'un axe longitudinal,
- les volets sont au nombre de deux,
- les volets sont diamétralement opposés,
- les volets présentent une épaisseur décroissante d'un bord libre vers les lignes de faiblesse et/ou d'une partie médiane desdits volets vers une partie rigide de la chambre,
- ladite partie rigide de la chambre est située entre les volets et le corps déformable,
- ladite partie rigide comprend des sommets situés entre deux extrémités voisines des volets,
- lesdits sommets sont disposés de manière à surmonter une ligne de renfort,
- lesdits sommets sont diamétralement opposés,
- chacun desdits volets comprend un organe déformable situé sur sa paroi intérieure, ledit organe étant relié à la paroi intérieure par une zone formant charnière,
- ledit organe est configuré pour être le long des volets, au repos, et s'écarter de la paroi intérieure sous l'effet d'un mouvement du produit de manière à déformer les volets au niveau des lignes de faiblesse, de manière à ce que les volets viennent en contact l'un de l'autre, fermant de la sorte le clapet haut et la chambre de dosage,
- lesdits volets comprennent des rainures séparant au repos chacun des volets en plusieurs sections, notamment parallèles, permettant au volet de se déformer pour la fermeture du clapet haut,
- lesdites rainures présentent un angle ouvert au repos et un angle à 0° lorsque le clapet haut est fermé, de manière à ce que la fermeture du clapet haut soit maintenue par blocage en compression des rainures,
- le corps de la chambre de dosage consiste en un soufflet,
- ledit soufflet est de forme cylindrique,
- ledit soufflet est décompressé au repos et compressé sous l'effet de la pression continue exercée sur le réservoir, de manière à diminuer le volume de la chambre de dosage et distribuer la dose de produit contenue dans celle-ci,
- la chambre de dosage comporte également un rebord assurant une fixation de la chambre de dosage dans le col du réservoir,
- l'insert est fait en matériaux élastomère, notamment Polyéthylène (PE),
- l'insert, en particulier la chambre de dosage, est issue de moulage.

Selon d'autres modes de réalisation qui pourront être combinés avec certaines des caractéristiques évoquées plus haut :
- la chambre de dosage comprend des lignes de faiblesse disposées selon un axe longitudinal dudit insert,
- la première partie de la chambre est formée d'un rebord s'amincissant en direction des lignes de faiblesse suivant une ligne effilée,
- le corps consiste en une zone plus fine que le rebord de la première partie,
- ladite zone est délimitée par le rebord de la première partie et le clapet bas,
- ladite zone est régulière,
- le corps est cylindrique,
- le rebord de la chambre forme un col de liaison avec le réservoir de la chambre,
- lesdits rebords de la première partie sont diamétralement opposés,
- la chambre de dosage comprend en outre une surépaisseur entre le corps et le clapet bas,
- le corps présente, au repos, une forme droite de manière à permettre au produit de s'insérer dans la chambre de dosage via le clapet haut,
- le corps se déforme, sous l'effet de la pression exercée par le produit, depuis le rebord de la première partie suivant les lignes de faiblesse et la ligne effilée, ledit corps étant contraint par la zone de surépaisseur.
- la chambre de dosage comprend deux pièces rigides opposées, lesdites pièces rigides présentant chacune une charnière délimitant :
   - une branche support, ladite branche support d'une première desdites pièces étant configurée pour être parallèle à la branche support de la pièce rigide opposée en s'étendant le long du corps ; et
      - une branche principale s'articulant de manière à contrôler le mouvement de déformation du corps,
   - les deux pièces rigides sont diamétralement opposées.

Selon un deuxième aspect, l'invention propose un récipient comprenant un réservoir déformable dans lequel un produit est destiné à être conditionné et un col équipé d'un dispositif selon l'invention en communication avec ledit réservoir.

### Présentation des figures

D'autres objets, caractéristiques et avantages de l'invention apparaîtront plus clairement dans la description qui suit, faite en référence aux figures annexées, dans lesquelles :
- la figure 1 présente une vue en coupe d'un récipient comprenant un dispositif de dosage, en état de repos, selon un mode de l'invention.
- les figures 2 à 6 sont des vues en coupe longitudinale (figures 2a, 3a, 4a, 5a, 6a) et en perspective montrant l'intérieur de la chambre de dosage (figures 2b, 3b, 4b, 5b, 6b) d'un dispositif de dosage, en état de repos (figures 2a et 2b), après inversion du dôme (figures 3a et 3b), après fermeture du clapet haut (figures 4a et 4b), après compression du soufflet (figures 5a et 5b) et après retour en position initiale (figures 6a et 6b), ceci selon un premier mode de réalisation de l'invention ;
- les figures 7, 8 et 9 sont des vues en coupe longitudinale d'un dispositif de dosage, selon un second mode de réalisation de l'invention, en état de repos, (fig. 7), après inversion du dôme (fig. 8) et après déformation du corps de la chambre (fig. 9);
- la figure 10 est une vue en coupe longitudinale d'un dispositif de dosage, au repos, comportant des pièces rigides pour contrôler la déformation de la chambre de dosage selon un troisième mode de réalisation de l'invention;
- la figure 11 présente les différentes étapes de déformation d'un dispositif de dosage fixé au niveau d'un organe interne, selon un quatrième mode de réalisation de l'invention qui ne fait plus partie de l'invention.

### Description détaillée

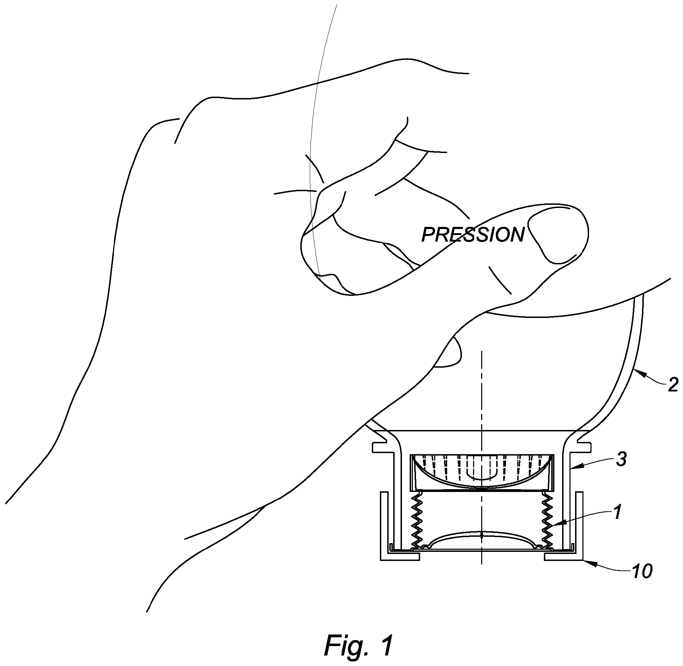

En référence à la figure 1, l'invention concerne un récipient comprenant un réservoir déformable 2, un col 3 rigide, en communication avec le réservoir 2, et un dispositif de dosage. Par déformable, on entend que le volume interne peut être modifié, en particulier comprimé, notamment sous l'action d'une pression d'un utilisateur.

Pour cela, comme illustré, le réservoir 2 est configuré pour être déformé par pression entre le pouce d'une main et les autres doigts de la même main de l'utilisateur. Le réservoir 2 peut également être configuré pour prendre appui contre un support et être déformé par n'importe quel doigt d'un utilisateur. Le réservoir 2 comprend, par exemple, une enveloppe souple déformable. Son caractère déformable peut être conféré par tout autre moyen.

Le réservoir 2 étant déformable, il est possible de modifier la pression exercée par le produit contenu dans ledit réservoir 2 sur le dispositif de dosage par une simple pression manuelle de l'utilisateur sur ses parois.

Le dispositif de dosage comprend un insert 1, avantageusement fait d'une seule pièce. Ainsi, l'insert 1 étant fait d'une seule pièce, il peut être fabriqué en utilisant un minimum de pièces moulées.

L'insert 1 est réalisé, par exemple, en un matériau souple, de préférence en matériaux Polyéthylène (PE), de tels matériaux présentant de bonnes propriétés en termes de déformation réversible, soit de mémoire de forme.

L'insert 1 comporte ici un rebord 10 formant col de liaison et assurant sa fixation dans le col 3 du récipient, de sorte que le col 3 du récipient est positionné à l'intérieur du rebord 10. Un bouchon 30 assure la solidarisation des deux éléments. Tout autre mode de fixation de l'insert 1 dans le col 3 est possible.

Le récipient est préférentiellement configuré pour être utilisé en étant orienté vers le bas. Autrement dit, le col 3 du récipient et le dispositif de dosage 1 qu'il accueille sont placés en dessous du réservoir 2.

En relation avec l'ensemble des figures, l'insert 1 comporte une chambre de dosage 11 déformable qui est stable au repos, c'est-à-dire quand aucune pression n'est exercée sur le réservoir 2.

La chambre de dosage 11 comprend au moins un clapet 12 permettant l'admission du produit depuis le réservoir 2 et un clapet 13 permettant la distribution du produit préalablement dosé. Compte-tenu de l'orientation du récipient évoqué plus haut, le clapet 12 permettant l'admission du produit est dit clapet « haut » et le clapet 13 permettant la distribution du produit est dit clapet « bas ». Cela étant, les notions de « clapet haut » et de « clapet bas » ne doivent pas être considérées comme limitatives. En effet, le dispositif de dosage conforme à l'invention, en particulier avant insertion dans le récipient auquel il est destiné, n'a pas vocation à être orientée dans une direction précise. La chambre dosage comprend en outre un corps 14 déformable qui relie le clapet haut 12 et le clapet bas 13.

La chambre de dosage 11 est configurée pour que le clapet bas 13 soit maintenu fermé lorsque le clapet haut 12 est ouvert, de sorte qu'au repos, le produit contenu dans le réservoir 2 puisse accéder directement à la chambre de dosage 11 sans sortir du récipient.

La chambre de dosage 11 comporte une première partie qui, sous l'effet d'une pression de l'utilisateur sur le réservoir 2 et par suite de la pression exercée par le produit, se déforme et entraîne la fermeture du clapet haut 12 et de la chambre de dosage 11, tandis que le clapet bas 13 reste fermé. La chambre de dosage 11 contient alors la dose de produit à distribuer. En effet, le volume de la chambre de dosage est défini par le volume délimité par le clapet haut 12, le clapet bas 13 et le corps 14.

Puis, sous l'effet de la pression du produit contenu dans le réservoir 2 qui continue à s'exercer sur la chambre de dosage 11, le corps 14 se déforme par compression entraînant l'ouverture du clapet bas 13 et de la chambre de dosage 11. L'ouverture du clapet bas 13 permet au produit d'être distribué.

L'utilisation de l'insert 1 permet de la sorte à l'industriel ou au préparateur de faire évoluer les systèmes de distribution classiques équipant ledit récipient en dispositif de dosage.

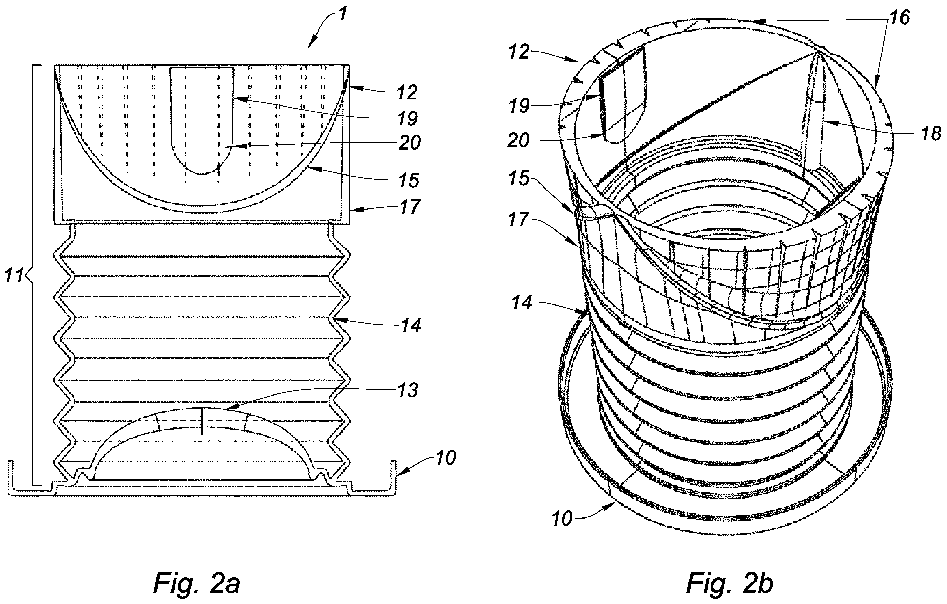

Les figures 2a et 2b montrent un dispositif de dosage, en état de repos, selon un premier mode de réalisation de l'invention. Le dispositif de dosage comprend un insert 1 de structure tubulaire s'étendant autour d'un axe longitudinal central, destiné à être orienté verticalement en utilisation.

La chambre de dosage 11 comporte une première partie déformable, comme annoncé précédemment, et une deuxième partie, également déformable, formant un dôme au niveau duquel se trouve le clapet bas 13.

Plus précisément, la première partie de la chambre 11 peut être délimitée par des lignes de faiblesse 15, le long desquelles elle peut se déformer, et par un bord libre.

De manière avantageuse, les lignes de faiblesse 15 sont situées dans un plan incliné par rapport à l'axe longitudinal central de l'insert 1 et forme de la sorte un arc de cercle, ledit cercle présentant un centre correspondant au centre d'une embouchure de l'insert 1. De préférence, lesdites lignes de faiblesse sont au nombre de deux et diamétralement opposées, de sorte que la première partie de la chambre 11 consiste en des volets 16 rabattables l'un vers l'autre. Les deux volets 16 diamétralement opposés ainsi formés constituent le clapet haut 12 de la première partie de la chambre 11.

De manière avantageuse, également, les volets 16 présentent une épaisseur décroissante depuis leur bord libre vers les lignes de faiblesse 15 et d'une partie médiane desdits volets 16 vers une partie rigide 17 de la chambre 11. Ainsi, les sections les plus épaisses permettent d'assurer le maintien de la première partie de la chambre 11 en position verticale autour de l'axe longitudinal central de l'insert 1 et une bonne étanchéité de la fermeture du clapet haut 12 en position fermée, tandis que les sections les moins épaisses, situées à proximité des lignes de faiblesse 15, permettent d'assurer la déformation de la première partie de la chambre 11 uniquement le long des lignes de faiblesse 15, lors des passages entre la position au repos et la position fermée des volets 16.

La partie rigide 17 de la chambre 11 assurant la verticalité de la structure tubulaire de la chambre 11 est située entre les volets 16 et le corps déformable 14. En particulier, la partie rigide 17 est délimitée par les lignes de faiblesse 15, de sorte que l'inclinaison desdites lignes de faiblesse 15 par rapport à l'axe longitudinal de l'insert 1 permet de définir, au niveau de la partie rigide 17, deux sommets diamétralement opposés. La partie rigide 17 est préférentiellement en surépaisseur par rapport aux volets 16. Ainsi, la rigidité de la partie rigide 17 n'est pas nécessairement obtenue par l'utilisation d'un autre matériau que celui des volets mais découle préférentiellement de la géométrie de la pièce.

En outre, de manière avantageuse, chacun desdits sommets de la partie rigide 17 est situé entre deux extrémités voisines des volets 16 et surmonte une ligne de renfort 18 dont le rôle est de rigidifier la chambre 11 au niveau de ces sections moins épaisses et d'assurer la verticalité de la structure tubulaire en conjonction avec la partie rigide 17.

De manière particulièrement avantageuse, lesdits volets 16 peuvent comprendre un organe déformable 19 situé sur leurs parois intérieures, ledit organe 19 étant relié à leurs parois intérieures via une zone formant charnière 20. Ainsi, une partie inférieure de l'organe 19 reste toujours solidaire des parois intérieures des volets 16 et donc, immobile par rapport audits volets 16, tandis qu'une partie supérieure de l'organe 19 peut s'écarter des parois par l'intermédiaire de la charnière 20.

L'organe 19 est configuré pour être en position verticale, au repos. Ainsi, la totalité de sa surface est en contact direct avec les parois intérieures des volets 16.

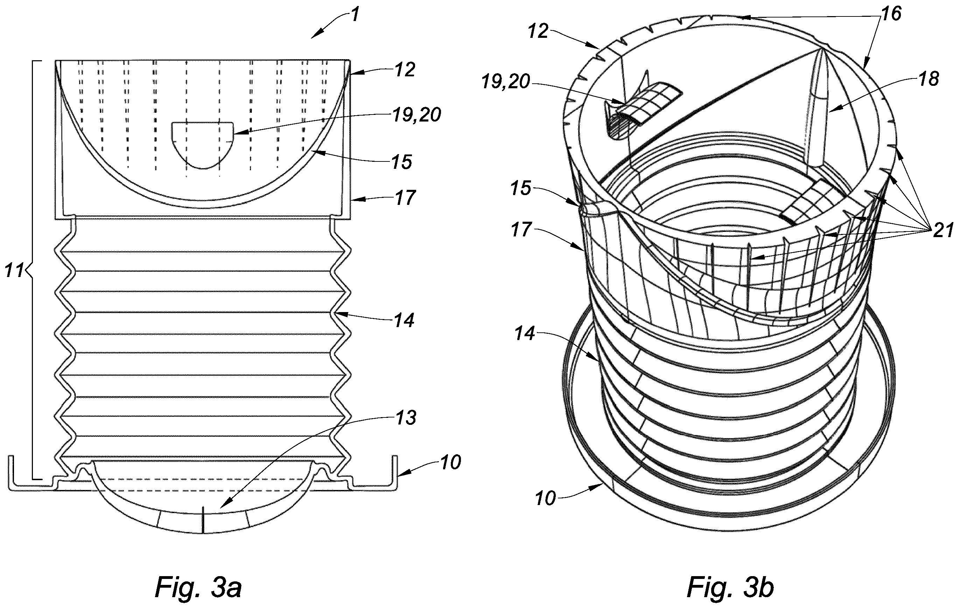

En référence aux figures 3a et 3b, sous l'effet d'un mouvement du produit, la deuxième partie de la chambre 11 se déforme, provoquant l'inversion du dôme au niveau duquel se trouve le clapet bas 13, sans ouvrir ledit clapet.

L'inversion du dôme créé un déplacement rapide du liquide en direction du volume initialement occupé par le dôme dans la chambre 11 et provoque la déformation de l'organe 19, qui s'écarte alors des parois intérieures des volets 16. L'inversion du dôme entraîne également une augmentation du volume effectif de la chambre de dosage 11.

De manière avantageuse, l'organe 19 est suffisamment éloigné des lignes de faiblesse 15 pour avoir une action levier sur les volets 16, et permettre leur déformation au niveau des lignes de faiblesse 15. De manière avantageuse, également, la partie inférieure de l'organe 19 possède une surface de contact suffisamment importante avec les zones les plus épaisses des volets 16 afin de faciliter la déformation desdits volets.

Les organes 19 de chacun des volets 16 sont ici diamétralement opposés et disposés sur un diamètre orthogonal ou diamètre reliant les sommets de la partie rigide 17.

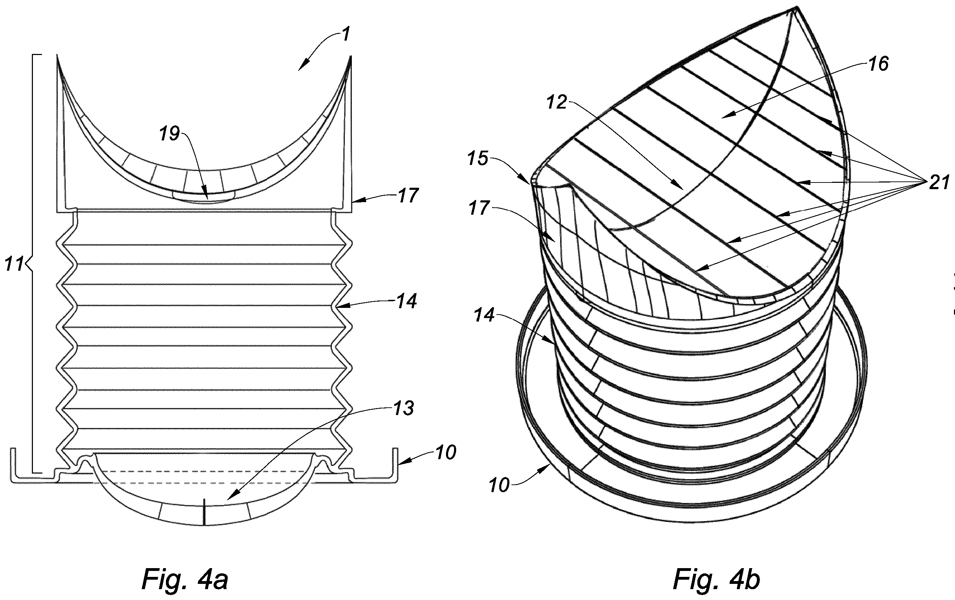

En référence aux figures 4a et 4b, en s'écartant de la paroi intérieure des volets 16, l'organe 19 provoque la déformation desdits volets 16 toujours sous la pression du produit contenu dans le réservoir déformable 2, ceci autour des lignes de faiblesse 15, entraînant la fermeture du clapet haut 12 et de la chambre de dosage 11, sans ouvrir le clapet bas 13. Ainsi, le volume de produit dosé correspond au volume délimité par la première partie et la deuxième partie de la chambre 11, la partie rigide 17 et le corps 14, en position fermée des volets 16.

Avantageusement, les volets 16 peuvent comprendre des rainures 21 séparant, au repos chacun des volets 16 en plusieurs sections parallèles, de manière à permettre au volet de se déformer pour la fermeture du clapet haut et d'assurer une fermeture hermétique dudit clapet haut 12. Au repos, les rainures 21 présentent un angle ouvert, tandis qu'après fermeture du clapet haut 12, leurs parois opposées viennent en contact les unes des autres, la nervure formant alors un angle d'ouverture à zéro. Ainsi, la fermeture du clapet haut 12 est maintenue par blocage en compression des rainures 21, ce qui prévient l'insertion du produit dans la chambre 11, ultérieurement à la fermeture du clapet haut 12 et ferme hermétiquement la chambre 11. Il n'est pas nécessaire que les rainures 21 des volets 16 soient situées les unes en face des autres, en dépit du fait que lesdits volets soient opposés.

Le corps 14 de la chambre 11 peut consister en un soufflet qui, au repos, est décompressé. De préférence, le soufflet peut être de forme cylindrique, mais pas nécessairement. Lors de la fermeture de la chambre 11, le volume délimité par le soufflet est complètement rempli par le produit.

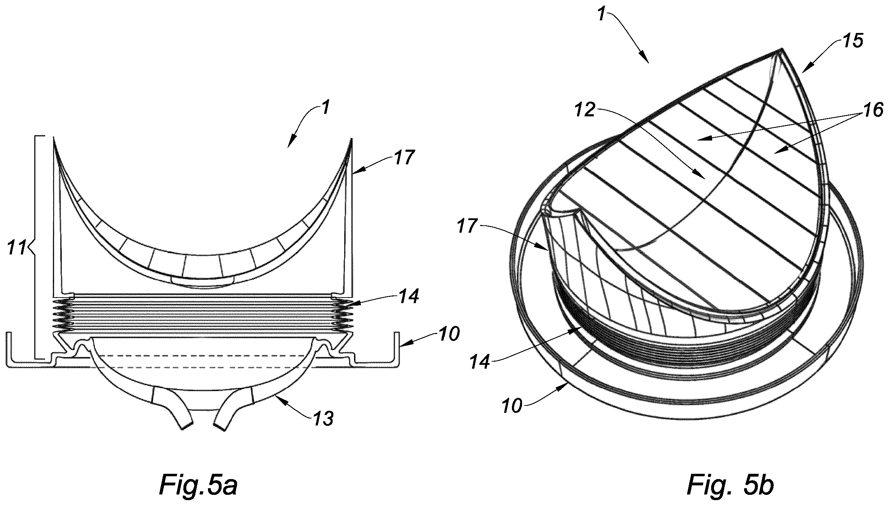

Puis, en référence aux figures 5a et 5b, sous l'effet de la pression continue du produit qui s'exerce maintenant sur la face extérieure des volets 16, le soufflet est compressé, diminuant le volume effectif de la chambre de dosage 11.

Il est à noter qu'il peut exister un état dans lequel le clapet haut 12 n'est pas encore fermé, les volets 16 n'étant que partiellement rabattus, et dans lequel le corps 14 commence à se déformer. Dans cet état, la surface des volets présente une composante radiale soumise à la pression du fluide, ce qui a pour effet de commencer à comprimer le soufflet.

La fermeture du clapet haut 12 ayant scellé la chambre 11 hermétiquement, la compression du soufflet entraîne une augmentation de la pression exercée par le produit sur la deuxième partie de la chambre 11, puis l'ouverture du clapet bas 13 et enfin la distribution de la dose de produit contenue dans la chambre 11. Lors de la compression du corps 14, la première partie est mobile avec le corps, c'est-à-dire, la première partie accompagne le corps 14 et descend dans le col du récipient.

Lorsque la totalité de la dose de produit a été distribuée, l'utilisateur peut relâcher la pression qu'il exerce sur le récipient et, l'insert 1 reprend sa configuration initiale, par exemple par son élasticité et/ou sous effet de mémoire de forme.

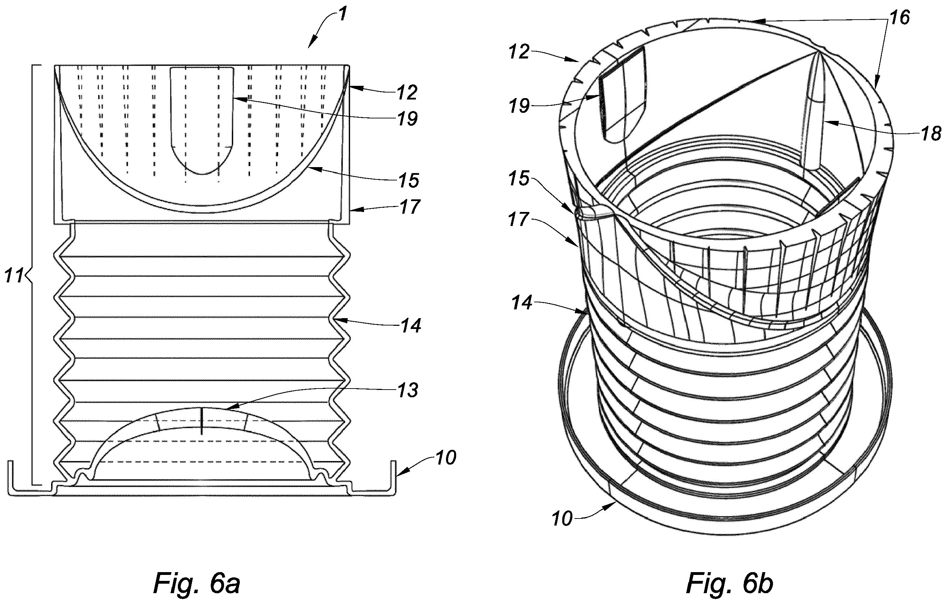

En effet, en référence aux figures 6a et 6b, tant que l'utilisateur exerce une pression sur le récipient alors que la distribution de produit est terminée, il y a équilibre de pression de part et d'autre du clapet bas qui ainsi se referme. Puis, lorsque l'utilisateur relâche la pression, le récipient augmente de volume et une dépression se forme dans le récipient. Tout d'abord, le clapet haut s'ouvre, ce qui a pour effet de propager la dépression jusque dans la chambre et successivement ou simultanément de déplier le corps 14 et de retourner le dôme formé par le clapet bas, lequel s'ouvre pour laisser passer l'air depuis l'extérieur vers le récipient. Lorsque l'équilibre des pressions intérieur/extérieur est rétabli, le clapet bas se referme et le système revient de la sorte à la configuration illustrée.

La dose de produit ainsi distribuée est indépendante de la pression exercée par l'utilisateur et de la viscosité du produit, puisqu'elle est déterminée par le volume de la chambre de dosage 11. Ainsi, des doses identiques de produit peuvent être distribuées jusqu'à ce que le réservoir 2 soit complètement vide.

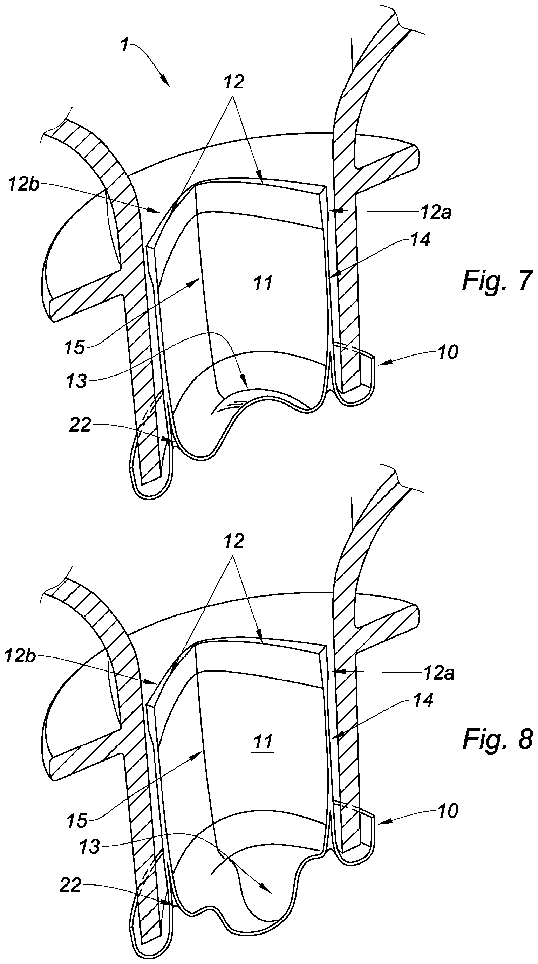

La figure 7 montre un dispositif de dosage, en état de repos, selon un second mode de réalisation de l'invention. Le dispositif de dosage comprend un insert 1 de structure tubulaire s'étendant autour d'un axe longitudinal central dans le col 3 d'un récipient.

En référence à la figure 7, la verticalité de la structure tubulaire est assurée par les lignes de faiblesse 15 qui sont disposées selon l'axe longitudinal de l'insert 1. En effet, dans ce mode de réalisation, les lignes de faiblesse 15 jouent également le rôle de lignes de guidage de la déformation et assurent sa forme à la chambre 11, au repos.

La première partie de la chambre 11 est formée d'un rebord 12a épais, de préférence de section rectangulaire, mais non limité à une telle forme, s'amincissant en direction des lignes de faiblesse 15 suivant une ligne effilée 12b. En particulier, la première partie de la chambre 11 est délimitée par le bord libre de la chambre 11 et par le corps 14.

Avantageusement, les lignes de faiblesse 15 sont au nombre de deux et diamétralement opposées, ce qui permet de former deux rebords 12a diamétralement opposés. De plus, comme l'épaisseur des rebords 12a diminue en direction des lignes de faiblesse 15, cela assure la déformation de la chambre de dosage 11 uniquement le long des lignes de faiblesse 15, et permet aux rebords 12a opposés de se plaquer l'un contre l'autre. Ainsi, les rebords 12a forment le clapet haut 12 de la première partie de la chambre 11.

Le corps 14 consiste en une zone plus fine que le rebord 12a de la première partie, et délimitée par le rebord 12a de la première partie et le clapet bas 13. Le corps 14 ayant une épaisseur plus fine que le rebord 12a, il peut se déformer indépendamment du rebord 12a le long des lignes de faiblesse 15. De préférence, le corps 14 peut être de forme cylindrique, mais pas nécessairement d'une telle forme. Il est avantageusement d'épaisseur constante.

De manière avantageuse, la chambre de dosage 11 peut comprendre une zone de surépaisseur 22 qui relie le corps 14 et le clapet bas 13. Ainsi, en conjonction avec les lignes de faiblesse 15, cette zone de surépaisseur 22 assure la verticalité de la structure tubulaire de la chambre 11. Ainsi, au repos, le corps 14 présente une forme verticale et ouverte qui permet au produit initialement contenu dans le réservoir 2 de s'insérer dans la chambre de dosage11 via le clapet haut 12.

Le clapet bas 13 se trouve au niveau du dôme formé dans la deuxième partie de la chambre 11. Le clapet bas 13 est relié au réservoir 2 via le rebord 10 qui comme dans le cas précédent coopère avec le col de liaison du réservoir 2.

En référence à la figure 8, sous l'effet de la pression exercée par l'utilisateur sur le réservoir 2 et de la pression du produit sur la deuxième partie de la chambre 11, cette dernière se déforme, provoquant l'inversion du dôme, sans ouvrir le clapet bas 13 se trouvant au niveau du dôme.

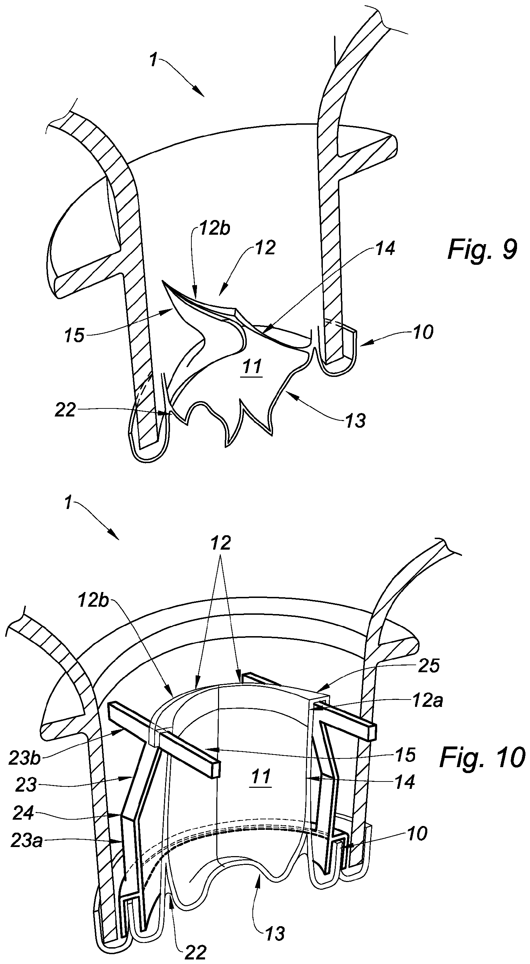

En référence à la figure 9, lors de son inversion, le dôme exerce une force de traction sur la surépaisseur 22 qui entraîne la déformation du corps 14, depuis le rebord 12a de la première partie suivant les lignes de faiblesse 15 et la ligne effilée 12b. Durant la déformation du corps 14, les rebords 12a opposés, se plaquent l'un contre l'autre, entraînant la fermeture du clapet haut 12 et la fermeture de la chambre de dosage 11, sans ouvrir le clapet bas 13. Un volume prédéterminé de produit est prêt à être distribué.

Toujours sous l'effet de la pression continue exercée sur le réservoir 2, le produit exerce un effort sur la face externe des parois fines du corps 14 et, contraint par le col de liaison 10, le corps 14 va chercher à s'aplatir et tomber de manière aléatoire d'un côté ou de l'autre de l'insert 1. La pression exercée par le produit sur la deuxième partie de la chambre 11 entraîne alors l'ouverture du clapet bas 13, presque simultanément avec le mouvement de déformation du corps 14. La dose de produit contenue dans la chambre 11 est distribuée.

De manière similaire au premier mode de réalisation, lorsque l'utilisateur relâche la pression exercée sur le récipient, a chambre de dosage 11 reprend alors sa configuration initiale.

Dans ce mode de réalisation, le mouvement de déformation de la chambre 11 étant aléatoire, le volume de produit dosé peut subir de légères variations d'une application à l'autre. En revanche, la dose de produit distribuée reste malgré tout indépendante de la pression exercée par l'utilisateur et de la viscosité du produit.

De manière très avantageuse, la chambre de dosage 11 peut être équipée de deux pièces rigides 23 opposées. Les pièces rigides 23 sont articulées de manière à contrôler précisément le mouvement de déformation de la chambre 11 et le plaquage des rebords 12a.

La figure 10 montre un dispositif de dosage, en état de repos, comprenant deux desdites pièces rigides 23, selon un troisième mode de réalisation de l'invention.

Il sera avantageux qu'un jeu soit aménagé entre le rebord 12a et le col 3 du récipient afin de favoriser le décollage dudit rebord 12a au début de la déformation dudit rebord 12a, ceci sous l'effet de la pression du produit se trouvant dans le jeu.

Chaque pièce rigide 23 comprend une charnière 24, délimitant une branche support 23a s'étendant verticalement depuis le col de liaison du rebord 10 de la chambre, ladite branche support 23a étant configurée pour être parallèle à la branche support 23a de la pièce rigide 23 opposée, et une branche principale 23b s'articulant verticalement de manière à contrôler le mouvement de déformation du corps 14. La branche principale 23b présente ici une configuration en T avec une partie distale liée au rebord 12a et une partie proximale liée à la charnière 24.

Avantageusement, la chambre 11 peut comprendre une structure de renforcement 25, de forme tubulaire qui permet une fixation tangentielle de la partie distale des branches principales 23b des deux pièces rigides 23. La structure de renforcement 25 formant une liaison avec les rebords 12a de la première partie de la chambre 11, elle peut être moulée directement lors de la fabrication de la chambre de dosage, qui est faite d'une seule pièce.

Avantageusement, les pièces rigides 23 sont faites d'un matériau déformable et résistant à la flexion, de préférence du polypropylène (PP).

Ainsi, sous l'effet de la pression exercée sur le réservoir 2, la force de traction exercée sur la surépaisseur 22 suite à l'inversion du dôme, entraîne une déformation contrôlée du corps 14 par fléchissement simultané des branches support 23a au niveau du rebord 10 et des branches principales 23b au niveau des charnières 24, qui passent d'une position quasi verticale à une position inclinée.

Puis, contraint par le col de liaison du rebord 10, le corps 14 cherchant à s'aplatir, les branches support 23a et principales 23b s'inclinent davantage et passent d'une position inclinée à une position quasi horizontale, de sorte que les parties distales des branches principales 23b viennent se plaquer l'une contre l'autre. La partie distale des branches 23b étant tangentielles à la structure de renforcement 25 au niveau des rebords 12a, ces derniers viennent en contact l'un contre l'autre en suivant exactement un diamètre de l'insert 1. Cela entraîne la fermeture du clapet haut 12 et la fermeture de la chambre de dosage 11, sans ouvrir le clapet bas 13. La chambre 11 contient alors une dose déterminée de produit.

De manière similaire au second mode de réalisation, la pression exercée par le produit sur la deuxième partie de la chambre 11 entraîne la compression de la chambre, l'ouverture du clapet bas 13 et la distribution de la dose de produit contenue dans la chambre 11. En revenant à sa configuration initiale, la chambre 11 permet aux pièces rigides 23 de retrouver leur position initiale.

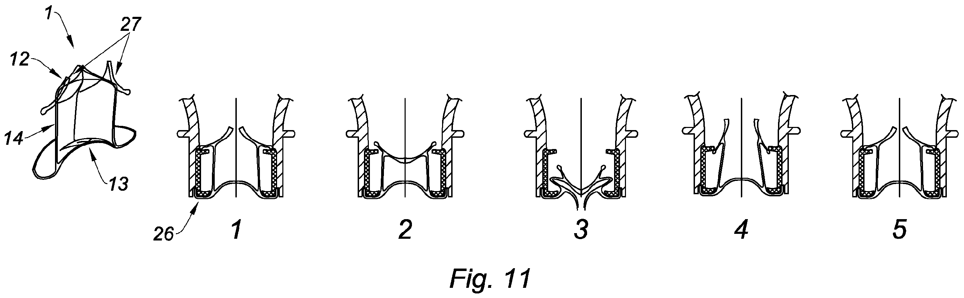

La figure 11 montre une variante de la chambre de dosage 11 qui ne fait plus partie de l'invention. L'insert du dispositif de dosage comprend ici une armature 26 destinée à être fixée au col 3 du récipient. Ladite armature 26 est annulaire.

La chambre de dosage 11 comprend un clapet haut 12, un corps 14, de préférence cylindrique, mais non limité à cette seule forme, et un clapet bas 13.

La chambre de dosage 11 est fixée au niveau de l'armature 26 qui est situé au niveau du corps 14 de la chambre 11. L'armature 26 est intégré au col 3 du récipient, de manière à pouvoir contrôler le mouvement de déformation de la première partie de la chambre 11.

En effet, au repos, le clapet haut 12 de la première partie de la chambre 11 est saillant par rapport au corps 14 et s'étend au-delà de l'armature 26. Le clapet haut 12 comprend des volets 27 qui se situent sur un plan incliné par rapport à l'axe longitudinal de l'insert 1 et viennent en contact de l'armature 26. Au repos, les volets 27 n'étant pas en contact, un espacement existe entre les volets 27, ce qui permet au produit contenu dans le réservoir 2 d'accéder à la chambre de dosage 11.

De manière avantageuse, les volets 27 sont au nombre de deux et opposés, de sorte que sous l'effet d'une pression exercée sur le réservoir 2, les deux volets 27 de la première partie de la chambre 11 pivotent autour d'un rebord de l'armature 26 et viennent en contact l'un de l'autre, fermant le clapet haut 12 et la chambre de dosage 11. La chambre de dosage 11 ayant un volume fermé, elle contient une dose prédéterminée de produit.

Sous la pression continue exercée sur le récipient, le produit contenu dans le réservoir 2 exerce une pression sur la première partie de la chambre 11 et comprime progressivement le corps 14, diminuant son volume effectif.

Simultanément, le clapet bas 13 s'ouvre et permet la distribution du produit préalablement dosé.

Une fois que le volume de produit dosé est complètement distribué, la chambre de dosage 11 est en dépression. Les volets 27 sont alors suffisamment inclinés pour provoquer l'ouverture du clapet haut 12 et permettre une aspiration d'air dans la chambre de dosage 11, qui reprend sa configuration initiale.

L'opération peut être renouvelée de manière à distribuer des doses répétables de produit indépendamment de la pression exercée par l'utilisateur sur le récipient ou de la viscosité du produit.

## Revendications

1. Dispositif de dosage destiné à équiper un récipient comprenant un réservoir déformable (2) contenant un produit, ledit dispositif comprenant un insert (1), ledit insert (1) comportant une chambre de dosage (11) déformable par pression du produit venant du réservoir (2), ladite chambre de dosage (11) comprenant :
- un clapet haut (12) d'admission du produit depuis le réservoir (2) ;
- un clapet bas (13) de distribution du produit;
- un corps (14) déformable reliant le clapet haut (12) et le clapet bas (13) ;
la chambre de dosage (11) étant configurée pour que, sous la pression du produit venant du réservoir (2), le clapet haut (12) se ferme par déformation d'une première partie de la chambre (11), le clapet bas (13) restant fermé, puis le clapet bas (13) s'ouvre sous l'effet de la déformation du corps (14), la chambre (11) comportant une deuxième partie qui se déforme avant déformation de la première partie, ladite deuxième partie de la chambre formant un dôme, ledit clapet bas (13) se trouvant au niveau dudit dôme, **caractérisé par** la déformation de la deuxième partie provoquant l'inversion du dôme, sans ouvrir ledit clapet bas (13).

2. Dispositif de dosage selon la revendication 1, dans lequel la chambre de dosage (11) comporte des lignes de faiblesse (15), ladite chambre de dosage (11) étant déformable le long desdites lignes de faiblesse (15) pour former la première partie de la chambre (11).

3. Dispositif de dosage selon la revendication 2, dans lequel ladite première partie comprend des volets (16) rabattables l'un vers l'autre, délimités par les lignes de faiblesses (15) situées dans un plan incliné par rapport à un axe longitudinal de l'insert (1).

4. Dispositif de dosage selon la revendication 3, dans lequel les volets (16) présentent une épaisseur décroissante d'un bord libre vers les lignes de faiblesse (15) et/ou d'une partie médiane desdits volets (16) vers une partie rigide (17) de la chambre (11).

5. Dispositif de dosage selon la revendication 4, dans lequel ladite partie rigide (17) de la chambre (11) comprend des sommets, lesdits sommets étant disposés de manière à surmonter une ligne de renfort (18).

6. Dispositif de dosage selon l'une quelconque des revendications 3 à 5, dans lequel chacun desdits volets (16) comprend un organe (19) déformable situé sur sa paroi intérieure, ledit organe (19) étant relié à la paroi intérieure par une zone formant charnière (20).

7. Dispositif de dosage selon la revendication 6, dans lequel ledit organe (19) est configuré pour être le long des volets (16), au repos, et s'écarter de la paroi intérieure sous l'effet d'un mouvement du produit de manière à déformer les volets (16) au niveau des lignes de faiblesse (15), de manière à ce que les volets (16) viennent en contact l'un de l'autre, fermant de la sorte le clapet haut (12) et la chambre de dosage (11).

8. Dispositif selon la revendication 7, dans lequel lesdits volets (16) comprennent des rainures (21) séparant au repos chacun des volets en plusieurs sections permettant au volet de se déformer.

9. Dispositif selon l'une quelconque des revendications précédentes, dans lequel le corps (14) de la chambre de dosage (11) consiste en un soufflet.

10. Dispositif selon l'une quelconque des revendications précédentes dans lequel la chambre de dosage (11) comporte également un rebord (10) assurant une fixation de la chambre de dosage (11) dans le col du réservoir (2).

11. Dispositif selon la revendication 2 ou 10, dans lequel :
- les lignes de faiblesse (15) sont disposées selon un axe longitudinal dudit insert (1) ;
- la première partie de la chambre (11) est formée d'un rebord (12a) s'amincissant en direction des lignes de faiblesse (15) suivant une ligne effilée (12b) ;
- le corps (14) consiste en une zone plus fine que le rebord (12a) de la première partie et délimitée par le rebord (12a) de la première partie et le clapet bas (13).

12. Dispositif selon la revendication 11, dans lequel la chambre de dosage (11) comprend en outre une surépaisseur (22) entre le corps (14) et le clapet bas (13).

13. Dispositif selon la revendication 12, dans lequel le corps (14) :
- présente, au repos, une forme droite de manière à permettre au produit de s'insérer dans la chambre de dosage (11) via le clapet haut (12) ; et
- se déforme, sous l'effet de la pression exercée par le produit, depuis le rebord (12a) de la première partie suivant les lignes de faiblesse (15) et la ligne effilée (12b), ledit corps (14) étant contraint par la zone de surépaisseur (22).

14. Dispositif selon l'une quelconque des revendications 11 à 13, dans lequel que la chambre de dosage (11) comprend deux pièces rigides (23) opposées, lesdites pièces rigides (23) présentant chacune une charnière (24) délimitant :
- une branche support (23a), ladite branche support (23a) d'une première desdites pièces étant configurée pour être parallèle à la branche support (23a) de la pièce rigide (23) opposée en s'étendant le long du corps ; et
- une branche principale (23b) s'articulant de manière à contrôler le mouvement de déformation du corps (14).

15. Dispositif selon l'une quelconque des revendications précédentes dans lequel l'insert (1) est fait d'une seule pièce.

16. Dispositif selon l'une quelconque des revendications précédentes, dans lequel l'insert (1) est fait en matériaux élastomère.

17. Récipient comprenant un réservoir (2) déformable dans lequel un produit est destiné à être conditionné et un col équipé d'un dispositif selon l'une quelconque des revendications précédentes en communication avec ledit réservoir (2).

## Patentansprüche

1. Dosierungsvorrichtung, dazu bestimmt, einen Behälter, der ein verformbares Reservoir (2) beinhaltet, das ein Produkt enthält, auszustatten, wobei die Vorrichtung einen Einsatz (1) beinhaltet, wobei der Einsatz (1) eine durch Druck des Produkts, das aus dem Reservoir (2) kommt, verformbare Dosierungskammer (11) umfasst, wobei die Dosierungskammer (11) beinhaltet:
- eine obere Zugangsklappe (12) des Produkts aus dem Reservoir (2);
- eine untere Ausgabeklappe (13) des Produkts;
- einen verformbaren Körper (14), der die obere Klappe (12) und die untere Klappe (13) verbindet;
wobei die Dosierungskammer (11) konfiguriert ist, damit, unter dem Druck des Produkts, das aus dem Reservoir (2) kommt, sich die obere Klappe (12) durch Verformung eines ersten Teils der Kammer (11) schließt, wobei die untere Klappe (13) geschlossen bleibt, wonach sich die untere Klappe (13) unter der Wirkung der Verformung des Körpers (14) öffnet, wobei die Kammer (11) einen zweiten Teil umfasst, der sich vor der Verformung des ersten Teils verformt, wobei der zweite Teil der Kammer eine Wölbung bildet, wobei sich die untere Klappe (13) auf Höhe der Wölbung befindet, **gekennzeichnet durch** die Verformung des zweiten Teils, der die Inversion der Wölbung bewirkt, ohne die untere Klappe (13) zu öffnen.

2. Dosierungsvorrichtung nach Anspruch 1, wobei die Dosierungskammer (11) Schwächungslinien (15) umfasst, wobei die Dosierungskammer (11) entlang der Schwächungslinien (15) verformbar ist, um den ersten Teil der Kammer (11) zu bilden.

3. Dosierungsvorrichtung nach Anspruch 2, wobei der erste Teil zueinander klappbare Komponenten (16) beinhaltet, die durch die Schwächungslinien (15) begrenzt sind, die in einer bezüglich einer Längsachse des Einsatzes (1) geneigten Ebene liegen.

4. Dosierungsvorrichtung nach Anspruch 3, wobei die Komponenten (16) eine von einem freien Rand in Richtung der Schwächungslinien (15) und/oder von einem mittleren Teil der Komponenten (16) in Richtung eines starren Teils (17) der Kammer (11) abnehmende Dicke aufweisen.

5. Dosierungsvorrichtung nach Anspruch 4, wobei der starre Teil (17) der Kammer (11) Scheitelpunkte beinhaltet, wobei die Scheitelpunkte derart angeordnet sind, um eine Verstärkungslinie (18) zu überbrücken.

6. Dosierungsvorrichtung nach einem der Ansprüche 3 bis 5, wobei jede der Komponenten (16) ein verformbares Bauteil (19) beinhaltet, das auf ihrer Innenwand liegt, wobei das Bauteil (19) mit der Innenwand durch eine Zone, die Scharnier (20) bildet, verbunden ist.

7. Dosierungsvorrichtung nach Anspruch 6, wobei das Bauteil (19) konfiguriert ist, in Ruhe entlang der Komponenten (16) vorzuliegen, und sich unter der Wirkung einer Bewegung des Produkts derart, um die Komponenten (16) auf Höhe der Schwächungslinien (15) zu verformen, von der Innenwand zu entfernen, derart, dass die Komponenten (16) miteinander in Kontakt kommen, wobei auf diese Weise die obere Klappe (12) und die Dosierungskammer (11) geschlossen werden.

8. Vorrichtung nach Anspruch 7, wobei die Komponenten (16) Kerben (21) beinhalten, die in Ruhe jede der Komponenten in mehrere Abschnitte unterteilen, die der Komponente erlauben, sich zu verformen.

9. Vorrichtung nach einem der vorstehenden Ansprüche, wobei der Körper (14) der Dosierungskammer (11) aus einem Faltenbalg besteht.

10. Vorrichtung nach einem der vorstehenden Ansprüche, wobei die Dosierungskammer (11) außerdem eine Randleiste (10) umfasst, die eine Fixierung der Dosierungskammer (11) in dem Hals des Reservoirs (2) gewährleistet.

11. Vorrichtung nach Anspruch 2 oder 10, wobei:
- die Schwächungslinien (15) gemäß einer Längsachse des Einsatzes (1) angeordnet sind;
- der erste Teil der Kammer (11) aus einer Randleiste (12a) gebildet ist, die sich in Richtung der Schwächungslinien (15) einer konischen Linie (12b) folgend verjüngt;
- der Körper (14) aus einer dünneren Zone als die Randleiste (12a) des ersten Teils besteht und durch die Randleiste (12a) des ersten Teils und die untere Klappe (13) begrenzt ist.

12. Vorrichtung nach Anspruch 11, wobei die Dosierungskammer (11) des Weiteren eine Verdickung (22) zwischen dem Körper (14) und der unteren Klappe (13) beinhaltet.

13. Vorrichtung nach Anspruch 12, wobei der Körper (14):
- in Ruhe eine gerade Form derart aufweist, um dem Produkt zu erlauben, sich mittels der oberen Klappe (12) in die Dosierungskammer (11) einzuführen; und
- sich unter Wirkung des von dem Produkt ausgeübten Drucks, aus der Randleiste (12a) des ersten Teils, der den Schwächungslinien (15) und der konischen Linie (12b) folgt, verformt, wobei der Körper (14) durch die Verdickungszone (22) beschränkt wird.

14. Vorrichtung nach einem der Ansprüche 11 bis 13, wobei die Dosierungskammer (11) zwei gegenüberliegende starre Teile (23) beinhaltet, wobei die starren Teile (23) jeweils ein Scharnier (24) aufweisen, das begrenzt:
- einen Trägerschenkel (23a), wobei der Trägerschenkel (23a) eines ersten der Teile konfiguriert ist, um parallel zu dem Trägerschenkel (23a) des gegenüberliegenden starren Teils (23) zu sein, indem es sich entlang der Länge des Körpers erstreckt; und
- einen Hauptschenkel (23a), der derart befestigt ist, um die Bewegung der Verformung des Körpers (14) zu steuern.

15. Vorrichtung nach einem der vorstehenden Ansprüche, wobei der Einsatz (1) aus einem einzigen Teil gefertigt ist.

16. Vorrichtung nach einem der vorstehenden Ansprüche, wobei der Einsatz (1) aus elastomerem Material gefertigt ist.

17. Behälter, beinhaltend ein verformbares Reservoir (2), worin ein Produkt dazu bestimmt ist, abgefüllt zu werden, und einen mit einer Vorrichtung nach einem der vorstehenden Ansprüche ausgestatteten Hals in Verbindung mit dem Reservoir (2).

## Claims

1. A metering device intended to equip a container comprising a deformable reservoir (2) containing a product, said device comprising an insert (1), said insert (1) comprising a metering chamber (11) deformable by pressure of the product coming from the reservoir (2), said metering chamber (11) comprising:
- an upper valve (12) for admitting the product from the reservoir (2);
- a lower valve (13) for dispensing the product;
- a deformable body (14) connecting the upper valve (12) and the lower valve (13);
the metering chamber (11) being configured so that, under the pressure of the product coming from the reservoir (2), the upper valve (12) closes by deformation of a first portion of the chamber (11), the lower valve (13) remaining closed, then the lower valve (13) opens under the effect of the deformation of the body (14), the chamber (11) comprising a second portion which deforms prior to the deformation of the first portion, said second portion of the chamber forming a dome, said lower valve (13) being at said dome, **characterized by**
the deformation of the second portion causing the dome to invert, without opening said lower valve (13).

2. The metering device according to claim 1, wherein the metering chamber (11) comprises lines of weakness (15), said metering chamber (11) being deformable along said lines of weakness (15) to form the first portion of the chamber (11).

3. The metering device according to claim 2, wherein said first portion comprises flaps (16) foldable towards each other, delimited by the lines of weakness (15) located in a plane inclined with respect to a longitudinal axis of the insert (1)-.

4. The metering device according to claim 3, wherein the flaps (16) have a decreasing thickness from a free edge towards the lines of weakness (15) and/or from a middle portion of said flaps (16) towards a rigid portion (17) of the chamber (11).

5. The metering device according to claim 4, wherein said rigid portion (17) of the chamber (11) comprises vertices, said vertices being arranged to overcome a reinforcement line (18).

6. The metering device according to any one of claims 3 to 5, wherein each of said flaps (16) comprises a deformable member (19) located on its inner wall, said member (19) being connected to the inner wall by a hinge area (20).

7. The metering device according to claim 6, wherein said member (19) is configured to lie along the flaps (16), at rest, and to move away from the inner wall upon movement of the product so as to deform the flaps (16) at the lines of weakness (15), so that the flaps (16) come into contact with each other, thereby closing the upper valve (12) and the metering chamber (11).

8. The device according to claim 7, wherein said flaps (16) comprise grooves (21) separating at rest each of the flaps into several sections allowing the flap to deform.

9. The device according to any one of the preceding claims, wherein the body (14) of the metering chamber (11) consists of a bellows.

10. The device according to any one of the preceding claims wherein the metering chamber (11) also comprises a rim (10) providing a fixation of the metering chamber (11) in the neck of the reservoir (2).

11. The device according to claim 2 or 10, wherein:
- the lines of weakness (15) are arranged along a longitudinal axis of said insert (1);
- the first portion of the chamber (11) is formed by a rim (12a) tapering towards the lines of weakness (15) along a tapered line (12b);
- the body (14) consists of an area thinner than the rim (12a) of the first portion and delimited by the rim (12a) of the first portion and the lower valve (13).

12. The device according to claim 11, wherein the metering chamber (11) further comprises an excess thickness (22) between the body (14) and the lower valve (13).

13. The device according to claim 12, wherein the body (14):
- has, at rest, a straight shape so as to allow the product to be inserted into the metering chamber (11) via the upper valve (12); and
- deforms, under the effect of the pressure exerted by the product, from the rim (12a) of the first portion along the lines of weakness (15) and the tapered line (12b), said body (14) being constrained by the area of excess thickness (22).

14. The device according to any one of claims 11 to 13, wherein the metering chamber (11) comprises two opposite rigid parts (23), said rigid parts (23) each having a hinge (24) delimiting:
- a support branch (23a), said support branch (23a) of a first of said portions being configured to be parallel to the support branch (23a) of the opposite rigid part (23) by extending along the body; and
- a main branch (23b) hinging so as to control the deforming movement of the body (14).

15. The device according to any one of the preceding claims wherein the insert (1) is made in one piece.

16. The device according to any one of the preceding claims, wherein the insert (1) is made of elastomeric materials.

17. A container comprising a deformable reservoir (2) in which a product is to be packaged and a neck provided with a device according to any one of the preceding claims in communication with said reservoir (2).
